# EUROPEAN PATENT APPLICATION

(11) **EP 0 693 418 A2**
(43) Date of publication of application: **24.01.1996**
(21) Application number: 95109312.9
(22) Date of filing: 16.06.1995
(51) Int. Cl.: B62L 3/02

(54) **Method for forming a brake or clutch control lever with its soft part moulded onto its rigid part, and the lever obtained**

(30) Priority: 20.07.1994 IT MI941531
(71) Applicant: DOMINO S.p.A., I-22060 Sirtori, Frazione Bevera (Como) (IT)
(72) Inventor: Bertini, Paolo, I-22060 Sirtori (Como) (IT)
(74) Representative: Luksch, Giorgio, Dr.-Ing.

(57) **Abstract**

A method for forming a lever (1) for manually controlling a brake or clutch, said lever comprising a metal or plastic rigid material part to be connected to a known lever support which fixes it to a motorcycle handlebar or another load-bearing member of a vehicle; and a soft material part (7) located in correspondence with the lever grip (5). This soft part is moulded onto the rigid part, said moulded part being fixed to this latter by filling recesses provided therein.

A lever obtained by the aforesaid method comprises a grip (5) having a rigid material first portion (8) associated with a soft material second portion (7), this latter at least partly covering said first portion 8 and forming substantially a single piece therewith.

## Description

This invention relates to a method in accordance with the introductory part of the main method claim. The invention also relates to a manual control lever for a vehicle brake or clutch in accordance with the introductory part of the relative independent claim.

With particular reference to traction levers with or without a return spring, these are used in particular for manually operating the brakes of bicycles and two or four wheel pedal vehicles in general, or the brakes and clutches of mopeds, motorcycles, delivery tricycles and agricultural machines. These levers comprise a first rigid material part connected to a support for fixing the lever to a load-bearing member (for example the handlebar) of the vehicle with which it is associated, and a second part (or grip) for cooperation with the user's fingers. This second part or grip comprises a gripping region (cooperating directly with said fingers) formed of a different material from and generally softer that of said first part.

In known arrangements the lever is formed completely of rigid material, a sheath of soft material such as rubber then being mounted on the grip. However, in this manner the lever and the sheath remain as two physically separate members, resulting in the possibility of different degrees of wear of these parts, with obvious consequences. In particular the sheath can tear, and in the limit can become detached from the rigid material grip with obvious consequences.

Moreover this known method of separately forming the lever and sheath results in high construction costs which are obviously reflected in the product selling price.

An object of the present invention is to provide a method for forming a brake or clutch lever of the aforesaid type which overcomes the drawbacks of analogous known methods.

A particular object of the invention is to provide a method of the stated type which is of simple implementation, is of low cost and enables a brake or clutch lever to be formed in which the soft material part of the grip is securely bonded to the rigid material part.

These and further objects are attained by a method in accordance with the corresponding accompanying claims.

A further object of the invention is to provide a lever formed by said method in which the soft material coating of the grip is integral with the rigid material thereof.

This object is attained by a lever in accordance with the corresponding accompanying claims.

The present invention will be more apparent from the accompanying drawing, which is provided by way of non-limiting example and in which:
Figure 1 is a side view of a lever according to the invention;
Figure 2 is a front view of the lever of Figure 1;
Figure 3 is a view from above of the lever of Figure 1;
Figures 4, 5 and 6 represent corresponding cross-sections on the lines 4-4, 5-5 and 6-6 of Figure 1.

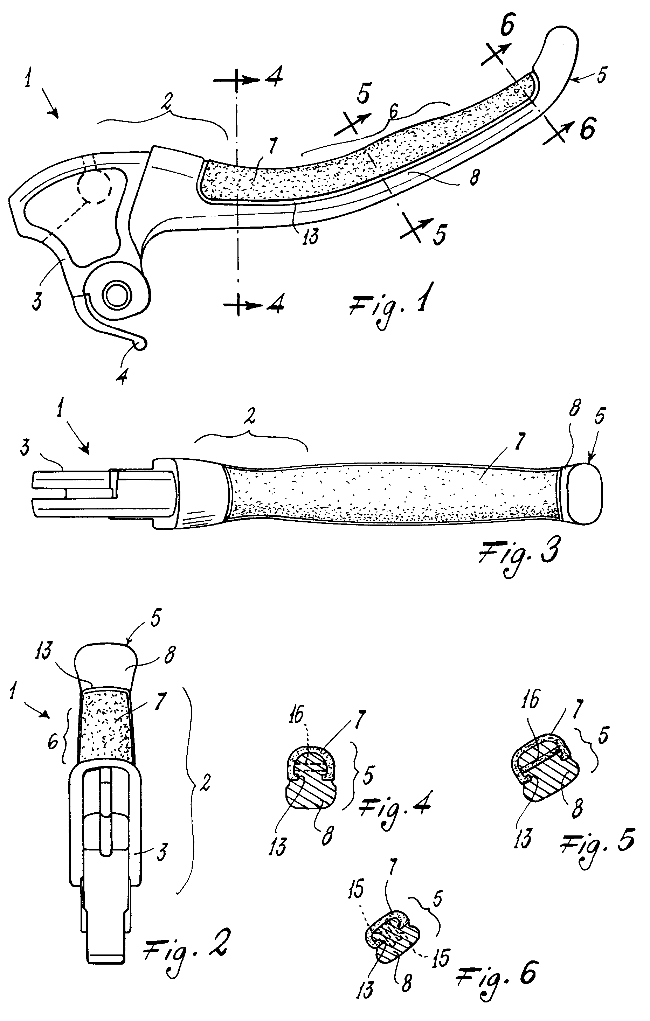

With reference to said figures, a lever for manually controlling a vehicle brake or clutch is indicated overall by 1 and comprises a body 2 having a usual end part 3 to be connected to a usual lever support (which fixes it to a load-bearing element, such as the vehicle handlebar in the example), not shown,. The part 3 can comprise a spring 4 in known manner. The body 2 also comprises a grip 5 connected to said part 3 and having a gripping region 6 intended to cooperate with the vehicle driver's fingers.

At least said gripping region 6 comprises a layer 7 of soft thermoplastic material, such as natural or synthetic rubber, associated with a grip portion 8 formed of rigid material, for example metal or a high-rigidity plastic. Said part 3 is also preferably formed of this rigid material. The region 6 is formed by moulding (over-moulding) the soft material onto the rigid material. Alternatively, and particularly if the rigid material is a plastic, the region 6 and the other parts of the body 2 of the lever 1 can be co-moulded. In any event the region 6 and the remaining parts of the body 2 define a single piece.

Preferably, the portion 8 of the grip 5 has an annular recess 13 surrounding the region 6 and in which the soft material of that region deposits during moulding. This allows the soft material to become securely fixed to the portion 8, and form a single body therewith.

In addition in said portion 8, holes or channels (dead 15 and/or through 16) are preferably provided in which the soft material deposits during moulding. This achieves a further and improved bond between the layer 7 and the portion 8.

Consequently, in one embodiment of the lever 1, the body 2 is initially formed without the layer 7. This body is provided with the annular recess 13 and the possible holes 15 and/or 16. The layer 7 is then over-moulded on this body, and while still in the fluid state occupies the recess 13 and the holes 15 and/or 16. On cooling, the layer 7 remains securely fixed to the grip portion 8 and forms one piece therewith. Hence the layer 7 cannot be detached from the grip 5.

One embodiment of the invention has been described. Others are however possible while remaining within the scope of the present invention. For example, the soft material can be moulded onto the the rigid material in different regions of the grip 5 so as to achieve a differential softness of the gripping region. Alternatively the soft material layer can cover the entire grip or can be of different colours along the grip for appearance reasons or to indicate different rigidities of the gripping region 6.

## Claims

1. A method for forming a manual control lever (1) for a vehicle brake or clutch, said lever (1) comprising a body (2) having a grip (5) which comprises a first part (8) of rigid material and a second part (7) of soft material, characterised in that said second part (7) is associated with the first part (8) by moulding, the whole then defining a single piece.

2. A method as claimed in claim 1, characterised by firstly forming the body (2) with the grip (5), both of rigid material such as metal, and then over-moulding the soft material second part (7) onto the grip (5).

3. A method as claimed in claim 1, characterised in that the body (2) with the grip (5), both of rigid material such as plastic or the like, and the soft material second part (7), are co-moulded.

4. A method as claimed in claim 2, characterised in that the grip (5) is provided with recesses (13) and/or holes (15, 16) for receiving the soft material of the second part (7) when this is over-moulded onto said grip (5).

5. A lever for manually controlling a vehicle brake or clutch, said lever (1) comprising a body (2) having an end portion (3) arranged to cooperate with a usual support which fixes the lever (1) to a load-bearing member such as a handlebar of said vehicle, for example a motorcycle, said body (2) comprising a grip (5), characterised in that this latter comprises two parts (7, 8), the first part (7) being of soft material and the second part (8) being of rigid material, the first part (7) being moulded onto the second part (8), said parts defining a single piece.

6. A lever as claimed in claim 5, characterised in that the second part (8) comprises at least one recess (13) and/or holes (15, 16) able to receive the soft material of the first part (7).

7. A lever as claimed in claim 5, characterised in that the first part (7) coves at least a portion (6) of the grip (5).

8. A lever as claimed in claim 5, characterised in that the first part (7) has regions of differential softness.
